# FASCICULE DE BREVET EUROPEEN

(11) **EP 3 948 596 B1**
(45) Date de publication et mention de la délivrance du brevet: **01.10.2025**
(21) Numéro de dépôt: 20711994.2
(22) Date de dépôt: 24.03.2020
(51) Int. Cl.: G06F 21/14, G06F 21/54

(54) **PROCÉDÉ D'EXÉCUTION DE CODE SÉCURISÉ, DISPOSITIFS, SYSTÈME ET PROGRAMMES CORRESPONDANTS**
VERFAHREN ZUM AUSFÜHREN EINES SICHEREN CODES, ENTSPRECHENDE VORRICHTUNGEN, SYSTEM UND PROGRAMME
METHOD FOR RUNNING SECURE CODE, CORRESPONDING DEVICES, SYSTEM AND PROGRAMS

(30) Priorité: 28.03.2019 FR 1903300
(43) Date de publication de la demande: 09.02.2022
(73) Titulaire: Banks and Acquirers International Holding, 75015 Paris (FR)
(72) Inventeur: GÉRAUD, Rémi, 26000 Valence (FR); SYLLA, Mamoudou, 75015 PARIS (FR)
(74) Mandataire: Germain Maureau
(86) Numéro de dépôt international: PCT/EP2020/058229
(87) Numéro de publication internationale: WO 2020/193583

(56) Documents cités:
- EP-A1- 1 758 395
- EP-A1- 1 850 261
- EP-A1- 2 892 175
- WO-A1-2015/058620

## Description

### 1. Domaine

L'invention se rapporte à la sécurisation de dispositifs d'utilisateurs. L'invention se rapporte plus particulièrement à la sécurisation de terminaux de communication dans le cadre de traitements effectués à distance. Notamment, l'invention se rapporte à la sécurisation de l'exécution de code par un dispositif électronique, dit dispositif d'exécution, lorsque l'exécution de ce code est commandée à distance par un dispositif électronique appelant. Un dispositif appelant peut notamment prendre la forme d'un serveur de traitement ou un serveur de sécurisation ou un serveur transactionnel. L'invention trouve plus particulièrement une application dans la cadre d'une mise en œuvre entre un terminal (dispositif d'exécution) et un serveur (dispositif appelant), lequel souhaite vérifier l'intégrité du dispositif d'exécution et/ou l'intégrité d'un code devant être exécuté par le dispositif d'exécution. L'invention peut cependant être mise en œuvre dans d'autres types de systèmes comprenant un dispositif d'exécution et un dispositif appelant.

### 2. Art Antérieur

Alors que les systèmes distribués deviennent omniprésents, des mécanismes de sécurité doivent être préparés pour faire face aux menaces croissantes contre ces systèmes. Les mécanismes de sécurité existants pour les systèmes distribués reposent sur l'authentification des clients et des serveurs et sur la protection des données en cours de traitement ou de communication à l'aide de mécanismes de chiffrement connus sur des canaux sécurisés. Ces mécanismes de sécurité ne permettent pas d'authentifier les exécutions de programmes sur les clients ou les serveurs, car les clients, les serveurs et les programmes en cours d'exécution peuvent être compromis une fois que les clients et les serveurs ont passé une phase d'authentification.

Ainsi, par exemple, un terminal de communication d'un utilisateur dispose d'une application qu'il a téléchargée auprès d'un service de fourniture d'application (« store »). Une fois téléchargée et installée sur le terminal de communication, l'application entre en communication avec un serveur, pour la mise en œuvre d'un ou de plusieurs services. La vision traditionnelle d'une telle mise en œuvre repose sur l'hypothèse que le serveur met en œuvre l'intégralité des services demandés par l'application du terminal de communication. Ainsi, la majorité des travaux de sécurisation porte sur le serveur qui fait l'objet de toutes les précautions. Or, de plus en plus, les terminaux de communication des utilisateurs effectuent des opérations sensibles, tant vis-à-vis de l'utilisateur qui possède le terminal de communication que du ou des serveurs avec lesquels il échange des données, qui peuvent s'avérer être extrêmement sensibles (données d'identités, données de santé ou données relatives à la santé, données de paiement, etc.).

Des techniques existantes qui implémentent une racine de confiance (statique « static root trust ou dynamique « dynamic root trust » ou matérielle « hardware root trust ») basée sur la prise en charge de modules de plate-forme sécurisée (TPM, « Trusted Platform module ») constituent une première brique pour la validation de l'exécution de code à distance sur un hôte (dispositif d'exécution) potentiellement non sécurisé : les terminaux de communication embarquent dans leur grande majorité des TEE (« trusted execution environment ») et/ou des SE (« Secure Element ») qui peuvent exécuter des opérations sensibles. Une racine de confiance est implémentée en validant essentiellement la signature d'un code exécutable juste avant son exécution. En tant que tels, ces mécanismes n'abordent pas les vulnérabilités possibles au moment de l'exécution dans les systèmes logiciels complexes qui appellent des modules liés de manière dynamique, localement ou à distance, ni la substitution dynamique de régions des exécutables par des composants malveillants dans le noyau hôte du dispositif d'exécution (directement au niveau du système d'exploitation).

Les mécanismes existants pour la validation de l'exécution à distance sont destinés à la détection des violations de sécurité sur un dispositif d'exécution qui exécute des programmes pour le compte d'un dispositif appelant et/ou sur instruction du dispositif appelant. Une approche consiste souvent à effectuer une validation du code juste avant l'exécution (validation statique). Cette approche n'est pas suffisante, car un module de gestion de mémoire ou de système de fichiers compromis peut fournir le code d'origine à la fonction de vérification lors de l'exécution du code compromis. La validation statique des exécutions est également limitée dans son incapacité à résoudre les problèmes liés à l'injection de code au moment de l'exécution, ce qui est typique de certains virus.

Un besoin est apparu pour un mécanisme qui valide un processus au moment de l'exécution. Un besoin est également apparu pour un mécanisme qui permette au dispositif appelant de lancer l'exécution de code sur le dispositif d'exécution d'une manière dynamique, c'est-à-dire d'une manière consistant à changer le flot d'exécution. Le problème spécifique abordé est l'authentification dynamique (c'est-à-dire au moment de l'exécution) du code s'exécutant sur un dispositif d'exécution, potentiellement non approuvé, à la demande d'un dispositif appelant. Un tel scénario est typique dans le monde Internet actuel, où les applications sont exécutées sur des terminaux d'utilisateurs, pour répondre à une demande d'un client. Les solutions existantes abordant ce problème ou des problèmes similaires supposent la disponibilité de composants fiables sur le serveur potentiellement non approuvé et les solutions les plus pratiques et acceptables disponibles utilisent le module de plateforme sécurisée (TPM). Ces solutions cependant ne permettent pas de modifier le flot d'exécution d'un code (notamment distant), et ce en toute sécurité, sans avoir besoin de mettre à jour le logiciel d'exécutant sur le dispositif d'exécution. Plus particulièrement, dans le contexte précédemment décrit, aucune solution ne permet de réaliser, de manière sécurisée, l'exécution de programmes sur un dispositif, même en utilisant des plateformes sécurisées. Les approches traditionnelles d'exécution de code à distance se présentent essentiellement sous deux formes :
- soit exécuter du code natif sur le dispositif d'exécution ; ce code natif doit être soit téléchargé depuis le dispositif appelant vers le dispositif d'exécution, soit être généré à l'aide d'un compilateur (dans ce deuxième cas c'est un code source qui est téléchargé depuis le dispositif appelant vers le dispositif d'exécution ;
- ou exécuter un script à l'aide d'un interpréteur (dans ce cas c'est un code scripté qui est téléchargé depuis le dispositif appelant vers le dispositif d'exécution.

Or chacune de ces solutions a des limites, en particulier, exécuter du code natif est risqué car **il** permet potentiellement à des attaquants d'exécuter des programmes arbitraires et de prendre le contrôle du dispositif d'exécution (ce type de problème est très bien connu des compilateurs dits « Just-In-Time », y compris WebAssembly etc.). Par ailleurs, les interprètes sont lents et exigent que toutes les fonctionnalités pertinentes soient implémentées. De plus, les scripts ne peuvent pas être optimisés (contrairement à un binaire compilé).

Il existe donc un besoin d'une solution d'exécution de code à distance qui permette de prendre en compte les problématiques Le document de l'état de la technique EP1850261-A1 divugue différentes techniques d'obfuscation de code.

### 3. Résumé

La méthode proposée par les inventeurs ne pose pas ces problèmes de l'art antérieur. En effet, il est proposé un procédé de contrôle d'exécution d'un code d'une application, procédé mis en œuvre par l'intermédiaire d'un dispositif électronique, appelé dispositif d'exécution (ResB, B), au sein de laquelle ladite application est exécutable.

Plus particulièrement, **il** est décrit un Procédé de contrôle de l'exécution d'une application AppO, procédé mis en œuvre au sein de l'application AppO, ladite application AppO s'exécutant sur un dispositif électronique, nommé dispositif d'exécution, ledit dispositif d'exécution étant connecté à un dispositif appelant par l'intermédiaire d'un réseau de communication. Le procédé comprend les étapes suivantes :
- Réception en provenance du dispositif appelant, d'une structure de données d'exécution, comprenant au moins un d'enregistrement, chaque enregistrement comprenant au moins un champ de données comprenant un nom de fonction codé ;
- Sauvegarde, au sein d'une zone mémoire spécifique, de ladite structure de données d'exécution ;
- Pour chaque enregistrement courant de la structure de données d'exécution mise en œuvre d'une fonction portant un nom de fonction décodé correspondant au nom de fonction codé, lorsque la fonction portant un nom de fonction décodé de l'application AppO peut être associée au nom de fonction codé.

Ainsi, **il** est possible de mettre en œuvre une exécution sécurisée d'une ou de plusieurs fonctions, tout en assurant qu'un dispositif malveillant ne puisse pas effectuer de recherche ou d'inférence de l'exécution. Le ou les résultats d'exécution de la fonction portant un nom de fonction décodé peuvent être transmis au dispositif appelant de sorte à contrôler un flot d'exécution par ledit dispositif appelant, des noms de fonctions masqués. Dès lors, un attaquant ne peut pas, aisément, interférer ou comprendre la nature des fonctions et des résultats qui sont mis en œuvre dans la cadre du contrôle d'exécution des fonctions mis en œuvre par le dispositif appelant.

Selon une caractéristique particulière, l'étape de mise en œuvre de la fonction portant un nom de fonction décodé correspondant au nom de fonction codé, comprend les étapes suivantes :
- Obtention du nom de fonction décodé à partir du nom de fonction codé dudit enregistrement courant ;
- Lorsque l'obtention du nom de fonction décodé à partir du nom de fonction codé est positive, exécution de la fonction portant le nom décodé.
Ainsi, il est possible d'introduire volontairement des erreurs dans la structure de données d'exécution afin de dérouter l'attention d'un dispositif attaquant ou malveillant.

Selon une caractéristique particulière, l'étape d'exécution de la fonction portant un nom de fonction décodé, appelée fonction courante comprend les étapes suivantes :
- Optionnellement, obtention au sein de l'enregistrement courant, d'un ou plusieurs paramètres d'exécution de la fonction courante FCour ;
- Tentative d'exécution de la fonction courante FCour avec le ou les paramètres d'exécution optionnels précédemment obtenus, avec un mécanisme d'exception sur exécution ;
- Lorsqu'aucune exception sur exécution n'est déclenchée, obtention du résultat d'exécution de la fonction courante ;
- Inscription du résultat de la fonction courante dans une zone mémoire spécifique de l'enregistrement courant et/ou de l'enregistrement suivant de la structure de données d'exécution.
Ainsi, il est possible de sérialiser l'exécution de plusieurs fonctions en gérant l'éventuel échec d'exécution de ces fonctions de manière simple et efficace.

Selon un mode de réalisation particulier, le procédé comprend en outre une étape d'obtention au sein de l'enregistrement courant, d'au moins une précondition d'exécution de ladite fonction courante et en ce que l'étape de tentative d'exécution de la fonction courante FCour n'est déclenché qu'en cas de respect de ladite au moins une précondition.

Ainsi, l'exécution des fonctions n'est pas limité à une simple série linéaire et peut donc prendre en compte des spécificités du dispositif d'exécution, de sons système d'exploitation ou de sa machine virtuelle.

Selon un mode de réalisation particulier, l'étape de mise en œuvre de la fonction portant le nom de fonction décodé correspondant au nom de fonction codé comprend une étape d'introspection de ladite application, délivrant un résultat d'introspection positif lorsqu'une fonction portant le nom de fonction décodé est identifiée parmi l'ensemble de fonctions de ladite application.

Ainsi, la confidentialité des noms de fonction est assurée.

Selon une caractéristique particulière, l'étape d'obtention du nom de fonction décodé à partir du nom de fonction codé dudit enregistrement courant comprend une étape de recherche de la présence d'une fonction existante à partir d'une annotation comprenant le nom de fonction codé, ladite annotation étant associée à la fonction portant le nom de fonction décodé.

Ainsi, le développement d'application est simplifié.

Selon un mode de réalisation particulier, ladite étape de réception de la structure de données d'exécution est précédée de l'établissement d'une liaison de communication sécurisée.

Selon une caractéristique particulière, ladite structure de données d'exécution est chiffrée et en ce que le procédé comprend une étape de déchiffrement de la structure de données d'exécution.

Selon un autre aspect, l'invention se rapporte également à un dispositif configuré pour effectuer un contrôle d'exécution d'une application AppO, ledit contrôle étant mis en œuvre au sein de l'application AppO, ladite application AppO s'exécutant sur un processeur dudit dispositif électronique, nommé dispositif d'exécution, ledit dispositif d'exécution étant connecté à un dispositif appelant par l'intermédiaire d'un réseau de communication

Un tel dispositif d'exécution comprend les moyens suivants :
- Réception en provenance du dispositif appelant, d'une structure de données d'exécution, comprenant au moins un d'enregistrement, chaque enregistrement comprenant au moins un champ de données comprenant un nom de fonction codé ;
- Sauvegarde, au sein d'une zone mémoire spécifique, de ladite structure de données d'exécution ;
- Pour chaque enregistrement courant de la structure de données d'exécution mise en œuvre d'une fonction portant un nom de fonction décodé correspondant au nom de fonction codé, lorsque la fonction portant un nom de fonction décodé de l'application AppO peut être associée au nom de fonction codé.

L'invention se rapporte également, selon un aspect complémentaire, à un système d'exécution d'un code. Un tel système comprend au moins un dispositif appelant prenant la forme d'un dispositif électronique de contrôle (dit dispositif appelant) tel que décrit précédemment et au moins un dispositif électronique d'exécution tel que décrit précédemment accessible depuis le dispositif appelant.

On comprend par ailleurs, dans le cadre de la présente qu'une étape de réception en provenance d'un dispositif correspond à une étape d'émission de ce dispositif et vice versa de sorte que les procédés décrits peuvent être symétriquement mis en œuvre par l'homme du métier.

Selon une implémentation préférée, les différentes étapes des procédés selon l'invention sont mises en œuvre par un ou plusieurs logiciels ou programmes d'ordinateur, comprenant des instructions logicielles destinées à être exécutées par un processeur de données d'un dispositif d'exécution selon l'invention et étant conçu pour commander l'exécution des différentes étapes des procédés, mis en œuvre au niveau du terminal de communication, du dispositif électronique d'exécution et/ou du dispositif de contrôle, dans le cadre d'une répartition des traitements à effectuer et déterminés par un codes source scripté.

En conséquence, l'invention vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de l'invention.

### 4. Dessins

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit un système dans lequel l'invention peut être mise en œuvre ;
- la figure 2 décrit le principe général de la méthode objet de l'invention ;
- la figure 3 décrit un mode de réalisation spécifique du procédé de traitement ;
- la figure 4 4 présente la structure de l'application d'origine ;
- la figure 5 illustre une architecture d'un dispositif appelant apte à mettre en œuvre un procédé de traitement de l'invention ;

### 5. Description des modes de réalisation

### 5.1. Rappels du principe

Comme exposé précédemment, le principe général de l'invention consiste à transmettre, à un dispositif d'exécution (B), un ensemble d'instructions (Elnstr) et/ou de commandes, à distance, à partir d'un dispositif appelant (A). Dans ce qui suit et ce qui précède, un dispositif électronique d'exécution, un dispositif d'exécution, un terminal, un client sont considérés comme faisant référence au dispositif d'exécution (B). De même, un dispositif appelant, un dispositif électronique appelant, un serveur, un dispositif de contrôle sont considérés comme faisant référence au dispositif appelant (A). Le dispositif appelant (A) et le dispositif d'exécution (B) peuvent être distants et connectés via un réseau de communication. Le dispositif appelant (A) et le dispositif d'exécution (B) peuvent être intégrés au sein d'un seul et même dispositif électronique.

Dans un mode de réalisation spécifique, décrit par la suite, le dispositif appelant (A) est un serveur, qui souhaite s'assurer de la conformité (à certaines exigences notamment en termes d'intégrité et de sécurité) d'un dispositif d'exécution (B), qui est un terminal de communication.

On se trouve ainsi dans une situation dans laquelle un dispositif électronique appelant souhaite faire exécuter par un dispositif électronique appelé, une ou plusieurs fonctions, notamment pour vérifier que le dispositif d'exécution (B) répond à certains critères en termes de sécurité. Un objectif de l'invention est de faire en sorte que l'exécution de ces fonctions à distance soit garantie, tant pour l'appelant que pour l'appelé, et que des mesures de sécurité permettent d'éviter qu'un dispositif électronique tiers, appelé dispositif frauduleux, puisse requérir l'exécution auprès du dispositif d'exécution (B) alors qu'il n'y est pas autorisé. Un objectif est également d'assurer que le dispositif d'exécution (B) se conforme à certaines exigences du dispositif appelant (notamment en termes de mise à jour). L'objectif enfin est de permettre une certaine évolutivité des exigences du dispositif appelant ou en minimisant les risques de reproductibilité, tant au niveau du dispositif d'exécution (B) qu'un niveau d'un dispositif « tiers » intermédiaire.

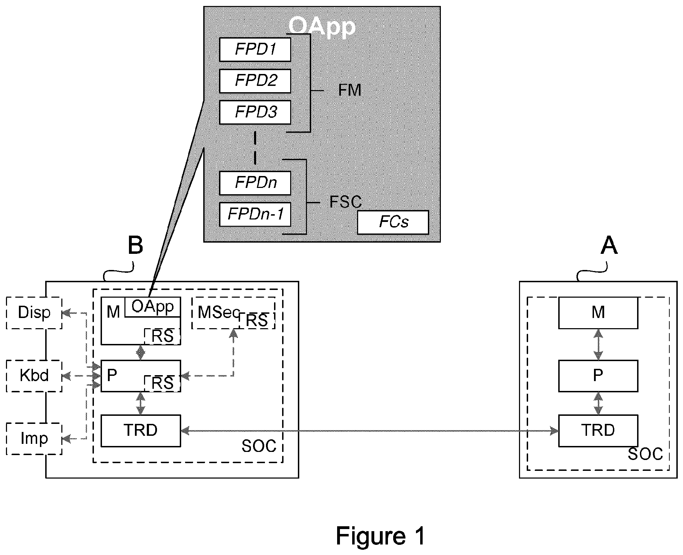

Avant de décrire en détail les différents mécanismes permettant de parvenir à ces résultats, on décrit l'architecture technique dans laquelle l'invention est mise en œuvre, en relation avec la figure 1.

Un dispositif électronique A, dit appelant, comprend un processeur (P), une mémoire (M), et des moyens de transmission de données (TRD). Ces moyens de transmission de données (TRD) peuvent se présenter sous plusieurs formes, comme cela est explicité par la suite. Un dispositif électronique B, dit appelé, comprend un processeur, une mémoire, et des moyens de transmission de données. Ces moyens de transmission de données peuvent se présenter sous plusieurs formes, comme cela est explicité par la suite. Les dispositifs A et/ou B peuvent également comprendre, en fonction des modes de réalisation, des composants (optionnels) matériels et/ou logiciels d'affichage (Disp), de saisie (KBD) et ou d'impression (IMP).

Les moyens de transmission peuvent par exemple se présenter sous la forme d'un BUS de données, ce bus de données étant connecté, de manière mono ou bidirectionnelle entre le processeur du dispositif A et le processeur du dispositif B. Alternativement, deux bus de transmission mono directionnels peuvent implémentés : un permettant la transmission du dispositif A vers le dispositif B et un permettant la transmission du dispositif B vers le dispositif A.

Dans d'autre situations, les moyens de transmission de données peuvent prendre la forme d'interface de communication réseaux. Par exemple, le processeur (du dispositif A et/ou du dispositif B) est connecté, par l'intermédiaire d'un bus de données à un ou plusieurs composants d'émission/réception de données utilisant une ou plusieurs technologies de transmission avec ou sans fil. Dans au moins une situation le dispositif A et/ou le dispositif B se présente sous la forme d'un SOC (de l'anglais pour « System on Chip » pour « Système sur Puce) » qui dispose de l'ensemble des composants nécessaires à la mise en œuvre du dispositif.

Dans un mode de réalisation, le dispositif B est intégré dans le dispositif A, en tant que composant additionnel de celui-ci. Dans un mode de réalisation, le dispositif A est intégré dans le dispositif B, en tant que composant additionnel de celui-ci.

Dans un mode de réalisation complémentaire des autres modes de réalisation possibles, le dispositif d'exécution (B) dispose d'un processeur sécurisé et/ou d'une mémoire sécurisée (Msec), lui permettant de mettre en œuvre des fonctions cryptographiques. Plus particulièrement, le dispositif B est en mesure de réaliser des traitements de chiffrement et de déchiffrement de données, notamment reçues du dispositif A. Le dispositif d'exécution (B) comprend par exemple, au sien de son processeur et/ou de sa mémoire, des registres spécifiques (RS) pour le traitement de données reçues. Notamment, les données reçues, après avoir été démodulées et/ou décodées, en fonction de la manière dont elles sont reçues, sont placées dans un ensemble spécifique de registres (et/ou de zones de mémoire). Les données sont placées dans ces registres (qu'il s'agisse de données de paramétrage de fonction ou de données de noms de fonction, comme cela est explicité). Le processeur du dispositif B effectue des traitements de contrôle et/ou de certification sur les données placées dans cet ensemble spécifique de registres (et/ou de zones de mémoire) avant d'effectuer une action d'utilisation de ces données. L'utilisation de tels registres spécifiques permet d'assurer que les données reçues (du dispositif A ou d'un autre dispositif, par exemple frauduleux, ne sont pas compromises et peuvent être utilisées dans le cadre de l'implémentation d'une ou de plusieurs fonctions qui doivent être mises en œuvre par le dispositif B, normalement pour le compte du dispositif A.

On suppose, dans le cadre de l'invention, que le dispositif d'exécution (B) dispose d'une application d'origine OApp, qui a été téléchargée auprès d'un magasin d'application (« store »). L'éditeur de cette application est un prestataire de service qui met notamment en œuvre le dispositif A.

Selon l'invention, tel que présenté précédemment, le dispositif d'exécution (B) utilise un magasin d'application (« store ») pour obtenir l'application d'origine OApp. En fonction de mode de réalisation et des conditions de mises en œuvre opérationnelles, l'application d'origine OApp est soit directement exécutée par le système d'exploitation du terminal de communication (il s'agit alors d'une application native), soit exécutée par l'intermédiaire d'une machine virtuelle (MV).

L'application d'origine OApp est distribuée de manière ouverte sur le magasin d'application. Cette application d'origine OApp comprend notamment un ensemble de fonctions prédéfinies (FPD1,... FPDn). Au sein de cet ensemble de fonctions prédéfini, on distingue deux types de fonction : le premier type comprend des fonctions de « surcharge » (FSc) dont l'objet est de surcharger des fonctions du système d'exploitation ou des fonctions de la machine virtuelle (MV) sur laquelle fonctionne l'application. Ces fonctions de surcharges (FSc) se contentent d'appeler une fonction de base et renvoient le résultat de cette fonction de base. Il peut par exemple s'agir de fonctions relatives à l'obtention de la date, de l'heure, du modèle de terminal, de la charge de la batterie, du numéro de version de tel ou tel composant logiciel ou matériel, etc. Ces fonctions sont surchargées pour les besoins de l'application d'origine. Le deuxième type comprend des fonctions « métiers » (FM) implémentées spécifiquement pour les besoins de l'application d'origine. Il peut s'agir par exemple de fonctions de traitement particulier ou des fonctions de calculs. Ces fonctions sont définies par l'éditeur de l'application d'origine pour ses besoins, avec pour objet la mise en œuvre d'un service ou d'une portion de service défini par lui.

L'application d'origine comprend également des fonctions spécifiques de communication (FCs), permettant d'échanger des données, par exemple sous une forme sérialisée, avec le dispositif appelant (A). Ces fonctions de communication peuvent comprendre des fonctions protocolaires classique de type ouverture de flux http, établissement de lien sécurisé, transmission de requête et réception de réponse.

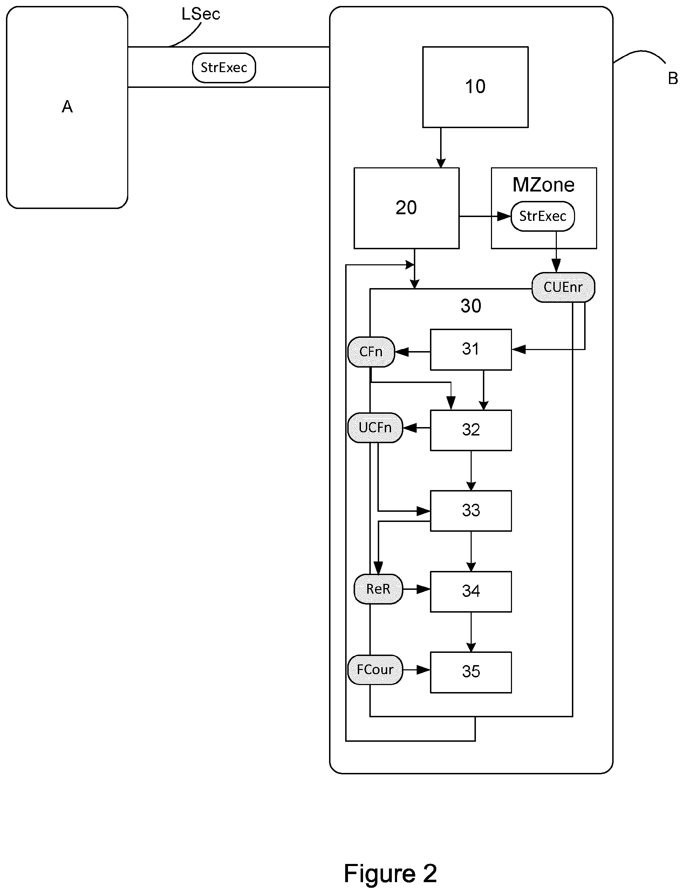

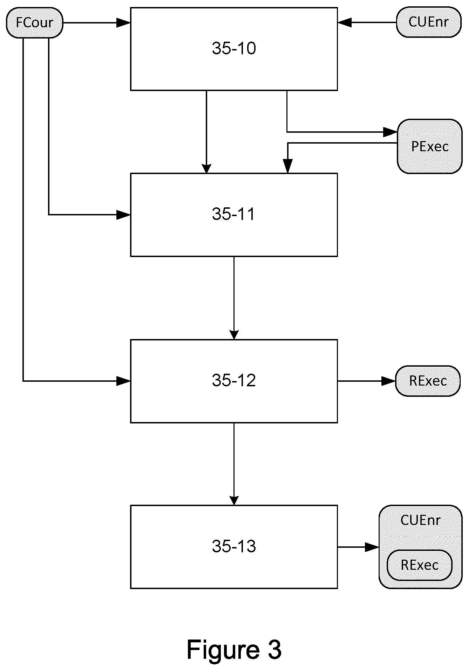

Afin de résoudre les problèmes liés à la sécurité de l'application, la sécurité des échanges et la sécurité du dispositif d'exécution (B), la mise en œuvre d'un appel de fonction (qui peut être distante) en provenance d'un dispositif appelant comprend les étapes suivantes, décrites en relation avec les figures 2 et 3, qui sont mises en œuvre, postérieurement à l'établissement d'une liaison de transmission de données sécurisée, dite liaison sécurisée :
- Réception (10), par l'intermédiaire de la liaison sécurisée (LSec), en provenance du dispositif appelant (A), d'une structure de données d'exécution (StrExec) ;
- Sauvegarde (20), au sein d'une zone mémoire spécifique (MZone, M, Msec), de ladite structure de données d'exécution (StrExec) ;
- Pour chaque enregistrement courant (CUEnr) de la structure de données d'exécution (StrExec) mise en œuvre (30) des étapes suivantes :
   - Obtention (31) d'un nom de fonction codé (CFN) ;
   - Décodage (32) du nom de fonction codé (CFN), délivrant un nom de fonction courant, appelé nom décodé (UCFN) ;
   - Recherche (33) de la présence d'une fonction existante à l'aide du nom de fonction décodé (UCFN), délivrant un résultat de recherche (ReR) ;
   - Lorsque le résultat de recherche est positif (34) (indiquant donc la présence d'une fonction portant le nom décodé (UCFN), appelée alors fonction courante (FCour), mise en œuvre (35) d'une étape d'exécution comprenant :
      - Optionnellement, obtention (35-10) au sein de l'enregistrement courant (CUEnr), d'un ou plusieurs paramètres d'exécution (PExec) de la fonction courante FCour ;
      - Tentative d'exécution (35-11) de la fonction courante FCour avec le ou les paramètres d'exécution (PExec) optionnels précédemment obtenus, avec un mécanisme d'exception sur exécution ;
      - Lorsqu'aucune exception sur exécution n'est déclenchée, obtention (35-12) du résultat d'exécution (RExec) de la fonction courante (FCour) ;
      - Inscription (35-13) du résultat (RExec) de la fonction courante (FCour) dans une zone mémoire spécifique de l'enregistrement courant (CUEnr) et/ou de l'enregistrement suivant de la structure de données d'exécution.

Les étapes 31 à 34, comme explicité plus bas peuvent être mise en œuvre indépendamment lors de la création d'une fonction spécifique, appelée fonction d'exécution en amont de la fonction. La fonction d'exécution est alors mise en œuvre dans l'étape d'exécution 35.

Ainsi, la méthode décrite permet d'assurer qu'une application malveillante, installée sur le dispositif d'exécution (B), ne puisse pas être informée des traitements mis en œuvre par l'application d'origine. La méthode décrite permet également une évolutivité de l'application d'origine, notamment en permettant l'exécution de fonctions, simples ou complexes, qui n'ont pas été prévues à l'origine. La méthode décrite permet également d'assurer, au dispositif appelant, que les fonctions effectivement exécutées par l'application sont bien les fonctions qui étaient attendues par le dispositif appelant.

### 5.2. Structure de données d'exécution

Certains des avantages sont procurés par l'utilisation de la structure de données d'exécution (également appelée structure d'exécution sécurisée) qui est reçue par l'application d'origine et enregistrée au sein d'une zone mémoire disponible pour l'application d'origine. La zone mémoire est de préférence protégée (soit de manière logicielle, soit de manière matérielle). Cependant, même en cas d'absence de protection, les bénéfices apportés par la mise en œuvre de la méthode proposés sont obtenus. En effet, la structure de données d'exécution comprend un ensemble d'enregistrements, chaque enregistrement de l'ensemble d'enregistrement comprend un nom de fonction codé (CFN) et une suite de paramètres d'entrée (IPSx) (cette suite de paramètres d'entrée étant optionnelle) et un ou plusieurs champs de résultats (RESx). Un nom de fonction codé se présente par exemple sous la forme d'une signature, chiffrée ou non, du nom de fonction décodé. Le nom de fonction décodé n'est pas exposé dans la structure de données d'exécution. Un exemple de structure d'exécution sécurisée est fourni en [table 1]

**[table 1]**

| | | |
|---|---|---|
| *CFN_1* | *IPS 1* | *RES1* |
| *CFN_2* | *IPS 2* | *RES2* |
| *CFN_1* | *IPS 3* | *RES3* |
| *CFN_4* | *IPS 4* | *RES4* |

On comprend, à la lecture de ce qui précède, que la structure de données d'exécution est également une structure de contrôle de flot. Dans l'exemple de la table 1, la fonction codée n#1 *(CFN_1)* est appelée, puis la fonction codée n#2 (CFN_2) est appelée, puis à nouveau la fonction codée n#1 (CFN_1) est appelée, et pour finir la fonction codée n#4 *(CFN_4)* est appelée. Les paramètres d'entrée et éventuellement les résultats de l'exécution des et ou de la fonction précédente sont également utilisés pour exécuter la fonction suivante. Donc à la fois les résultats d'exécution des fonctions peuvent être transmis au dispositif appelant, pour contrôler le flot d'exécution et contrôler l'exactitude des résultats intermédiaires obtenus par le dispositif appelé et à la fois le dispositif appelé peut se servir des résultats d'exécution des fonctions pour paramétrer l'exécution des fonctions suivantes. La transmission des résultats d'exécution du flot peut être directe (i.e. dès que la fonction est exécutée), ou bien être réalisée à la fin de l'exécution du flot d'exécution, dans le cadre de la transmission d'une structure de données récapitulative au dispositif appelant.

En conditions opérationnelles, la structure de données d'exécution est plus complexe que l'exemple précédemment illustré. En effet, la structure de données d'exécution peut comprendre également des mécanismes de contrôle de flot d'exécution, permettant par exemple la mise en œuvre conditionnelle des fonctions en fonction des résultats des exécutions précédentes, permettant ainsi une exécution intelligente des fonctions selon les spécifications du dispositif appelant. Ainsi, grâce à cette technique, il est possible que le dispositif d'exécution (B) exécute du code applicatif nouveau (c'est-à-dire au moins nouveau dans son enchaînement, voire complètement nouveau, en fonction des paramètres fournis), sans besoin de mettre à jour l'application d'origine. La [table 2] est un autre exemple de structure d'exécution sécurisée.

**[table 2]**

| | | | | |
|---|---|---|---|---|
| *CFN_1* | *PreEx_1* | *IPS 1* | *PostEx_1* | *RES1* |
| *CFN_2* | *PreEx_2* | *IPS 2* | *PostEx_2* | *RES2* |
| *CFN_1* | *PreEx_3* | *IPS 3* | *PostEx_3* | *RES3* |
| *CFN_4* | *PreEx_4* | *IPS 4* | *PostEx_4* | *RES4* |

Deux colonnes sont ajoutées dans cette table. Plus particulièrement, pour chaque fonction codée, une ou plusieurs conditions de pré-exécution (PreEx_x) optionnelles peuvent être mises en œuvre. Il en va de même pour la post-exécution (PosrEx_x). Avantageusement, et optionnellement, ces conditions d'exécution sont chiffrées (par le dispositif appelant) et elles sont déchiffrées à la volée (par le dispositif d'exécution), par exemple lors de l'obtention du nom de fonction décodé (étape 32) ou encore lors de l'obtention des paramètres d'exécution (étape 35-10).

Dans un autre mode de réalisation, le contrôle de flot d'exécution peut être réalisé au niveau du dispositif appelant. Plus particulièrement, la structure d'exécution sécurisée ne comprend qu'un seul enregistrement à la fois. A chaque exécution de la fonction contenue dans la structure d'exécution sécurisée, le résultat est immédiatement transmis au dispositif appelant, qui prend des décisions en fonction de ce résultat et transmet au dispositif d'exécution (B) une nouvelle structure d'exécution sécurisée, comprenant un ou plusieurs enregistrements. L'avantage est ici de disposer d'une latitude plus importante dans le contrôle de l'exécution.

Dans au moins un mode de réalisation, au lieu d'appeler successivement des fonctions dans l'ordre, par exemple selon le flot d'exécution de la table 2, on définit une composition monadique pour créer une fonction spécifique (nommée fonction résultante) qui se comporte comme la composition des fonctions à appeler, selon le flot d'exécution prévu. Cela garantit que toute la fonction résultante est exécutée (même si des erreurs surviennent lors de l'exécution, la fonction résultante est en mesure de se terminer) et rend cette fonction résultante plus efficace.

Une monade de Kleisli qui utilise des erreurs d'agrégats (plusieurs erreurs peuvent donc être détectées) est par exemple utilisée pour mettre en œuvre une telle fonction résultante.

Ainsi, par exemple, l'application d'origine dispose d'un contrôleur de composition. Ce contrôleur utilise la table d'exécution (e.g. Table 1, Table 2) pour construire une fonction résultante qui comprend l'ensemble des fonctions de la table d'exécution et éventuellement une série de structures conditionnelles associées (e.g. table 2). Cette fonction spécifique, construite en temps réelle par le contrôleur de composition a pour objet la mise en œuvre de la liste des fonctions de la table tout en permettant une gestion efficace des éventuelles erreurs qui peuvent survenir durant l'exécution des fonctions de la table d'exécution. Outre les monades, des structures de type « try-catch » peuvent également être mise en œuvre en fonction de modes de réalisation et du langage utilisé.

Typiquement, une erreur peut se produire lorsque le dispositif appelant commande l'exécution d'une fonction (par exemple F1) au dispositif d'exécution. Cette fonction dont le dispositif appelant sait qu'elle existe, dans une version X prend théoriquement en entrée trois paramètres. Le dispositif appelant, reçoit la table d'exécution et essaie d'exécuter la fonction F1 avec les trois paramètres fournis. Malheureusement, la « version » Y de la fonction F1 en possession du dispositif d'exécution nécessite quatre paramètres. Etant donné que l'application d'origine ne dispose pas de ce quatrième paramètre, la tentative d'exécution de F1 provoque une erreur. Sans mécanisme de composition et/d'interception, une telle situation conduirait à l'arrêt de la fonction résultante, et donc à l'impossibilité de mettre en œuvre les autres fonctions de la fonction résultante. Grâce à la technique de gestion de la fonction résultante, l'exécution de l'ensemble des fonctions, selon le flot d'exécution souhaité, est possible, quand bien même tout ou partie de l'ensemble des fonctions de la table d'exécution provoque des erreurs d'exécution.

Par ailleurs, ces erreurs d'exécution sont attrapées et sont insérées dans la structure de résultats transmise par l'application d'origine.

Par ailleurs, le contrôleur (ou la fonction d'origine) fournit, en fonction des modes de réalisation, une version sérialisée des fonctions qui sont exécutées, également dans la structure de résultats afin que le contenu de ces fonctions puisse faire l'objet d'une authentification.

### 5.3. Sécurisation de l'exécution par introspection

Parmi les étapes importantes du procédé décrit précédemment on identifie le décodage (32) du nom de fonction codé (CFN), délivrant un nom de fonction courant, appelé nom décodé (UCFN) et la recherche (33) de la présence d'une fonction existante à l'aide du nom de fonction décodé (UCFN). En fonction des conditions de mise en œuvre opérationnelles, ces deux étapes peuvent consister en une seule et même étapes.

Dans un premier mode de réalisation, le nom de fonction codé consiste en une signature d'un nom de fonction, connu du dispositif appelant. En effet, selon l'invention, le gestionnaire de l'application d'origine est au moins en partie lié au service rendu par le dispositif appelant. Le dispositif appelant est donc en mesure de prendre connaissance de l'ensemble des fonctions prédéfinies (FPD1,... FPDn) dans l'application d'origine et ce en avance de phase. Le dispositif appelant (ou plutôt le gestionnaire du dispositif appelant peut donc, à partir de l'ensemble des fonctions prédéfinies (FPD1,... FPDn) dans l'application d'origine, dériver une structure des données de nom de fonctions codées (CFN). La transformation d'un nom de fonction prédéfinie (FPD_x) en un nom de fonction codée (CFN_x) est réalisée, dans ce mode de réalisation, par l'application d'un algorithme de signature (ASig). Il peut s'agir d'une signature simple (obtenue par exemple par l'intermédiaire d'une fonction de hash classique, ou bien une signature particulière faisant intervenir une fonction cryptographique et une clé de chiffrement, comme par exemple une clé de chiffrement de session obtenu lors de l'établissement de la liaison de transmission de données de données sécurisée. Ainsi la transformation d'un nom de fonction prédéfinie (FPD_x) en un nom de fonction codée (CFN_x) est réalisée soit préalablement, soit en temps réel, la deuxième solution étant la plus performante d'un point de vue sécuritaire.

Quoi qu'il en soit, lorsqu'il reçoit la structure d'exécution sécurisée, l'application d'origine du dispositif d'exécution (B) effectue, dans ce mode de réalisation, un déchiffrement, optionnel, qui délivre une signature non chiffrée. Sur la base de cette signature non chiffrée, dans ce premier mode de réalisation, un décodage de la signature est effectué et un mécanisme d'introspection (réflexivité) est utilisé pour permettre la recherche ou l'appel immédiat de la fonction sur la base de son nom décodé, si celui-ci est correct. De manière additionnelle, un mécanisme d'annotation du code est mis en œuvre au sein de l'application d'origine. Cela nous permet d'attribuer à chaque fonction une étiquette qui persistera jusqu'à l'obscurcissement (même si l'obscurcissement effectue un chiffrement de chaîne et d'autres manipulations, la réflexivité garantit que le programme lui-même peut toujours lire ses propres chaînes). Ces deux mécanismes (réflexivité et annotation) sont utilisés pour faciliter l'exécution de fonctions, y inclus des fonctions nouvelles, jamais appelées précédemment, tout en évitant la problématique de « parsing » d'une commande qui serait transmise en claire. Ainsi, il est possible d'appeler une fonction au moment de l'exécution en connaissant son nom (et en lui fournissant des paramètres). Cette approche pose cependant deux problèmes qui sont résolus par la technique précédemment décrite :
- Il n'est pas souhaitable d'autoriser l'appel de toutes les fonctions, car cela entrainerait une absence de sécurité: ceci est résolu en utilisant une signature (éventuellement cryptographique) du nom de la fonction, qui est vérifiée avant d'effectuer l'appel, comme cela a été précédemment explicité.
- lors de l'utilisation de l'obscurcissement (obfuscation), les noms de fonction sont modifiés.

Pour apporter une solution au deuxième problème, un mécanisme d'annotation est utilisé qui permet d'attribuer à chaque fonction une étiquette qui persiste jusqu'à l'obscurcissement (même si l'obscurcissement effectue un chiffrement de chaîne et d'autres manipulations, la réflexivité garantit que le programme lui-même peut toujours lire ses propres chaînes de caractère à l'exécution). Ces deux problèmes peuvent être résolus avec élégance avec la même solution, à savoir la signature elle-même. L'utilisation des annotations fournit une autre couche de protection, car les fonctions sans annotations ne peuvent pas être appelées (même si un attaquant parvient à deviner le nom d'une la fonction obfusquée et à forger une signature cryptographique de cette fonction obfusquée...).

Donc, en résumé, lors de la conception de l'application d'origine, on ajoute une annotation, semblable à :
@remote (code = H)

Cette annotation est ajoutée la fonction à laquelle on souhaite pouvoir autoriser des appels via le mécanisme décrit dans la présente demande. Le code H est (par exemple) le hachage du nom de la fonction tel que décidé par le concepteur de l'application d'origine, et correspond à un nom de fonction codé CFN.

Dans ce mode de réalisation, pour appeler la fonction UCFN correspondant à l'annotation CFN, le dispositif appelant transmet le code H (signé) (en tant que nom de fonction codée dans la structure de données d'exécution sécurisée). L'application d'origine du dispositif d'exécution (B) vérifie la signature et, lorsque celle-ci est valide, utilise la réflexivité pour rechercher une fonction UCFN avec l'annotation correspondante (c'est-à-dire avec l'annotation H correspondant à la CFN). Puis, en utilisant à nouveau la réflexivité, appelle cette fonction UCFN. Ainsi, ce mode de réalisation ne nécessite que peu de modification dans la manière dont l'application d'origine est conçue.

Dans un autre mode de réalisation, un mécanisme de déclaration qui offre la possibilité d'associer un code H (un nom de fonction codé CFN) avec un nom de fonction décodé (UCFN). Bien que cette technique soit sous optimale par rapport à l'utilisation d'annotations, elle permet également d'assurer une certaine protection des noms des fonctions : une table est présente au sein de l'application. Elle comprend autant d'enregistrements qu'il y a de fonctions dont on souhaite autoriser une exécution par l'intermédiaire du procédé précédemment décrit. Chaque enregistrement comprend deux champs : un champ comprenant le nom de fonction codé CFN et un enregistrement comprenant un chiffré (une version chiffrée) du nom de fonction décodé (UCFN). Cette version chiffrée du nom de fonction décodé est appelée CCFN. Dans ce mode de réalisation, ainsi, plutôt que d'utiliser deux fois le mécanisme de réflexivité, on ne l'utilise qu'une seule fois. La [table 3] est un exemple de structure de déclaration.

**[table 3]**

| | |
|---|---|
| *CFN1* | CCFN*1* |
| *CFN2* | CCFN*2* |
| *CFN3* | CCFN*3* |
| *CFN4* | CCFN*4* |

Dans ce mode de réalisation, on possède deux versions du nom de fonction : une version correspondant à la signature (éventuellement cryptée), CFN et une version chiffrée CCFN. A l'exécution, le cœur applicatif de l'application d'origine réceptionne le nom de fonction codé (et chiffré) CFN_x, et comme indiqué précédemment, vérifie que la signature est valide. Si la signature (correspondant au nom de fonction codé CFN_x) est valide, il recherche au sein de la structure déclarative la version chiffrée du nom de fonction CCFN_x correspondant au nom de fonction codé CFN_x. Une fois la version chiffrée du nom de fonction CCFN_x obtenue, le cœur applicatif déchiffre cette version chiffrée (en mémoire vive, le résultat du déchiffrement n'est pas copié sur une mémoire de masse) et utilise ce résultat pour l'opération d'introspection qui délivre le nom de fonction réel (CFN) qui est donc appelé. L'opération de déchiffrement du nom de fonction est avantageusement réalisée par l'intermédiaire d'une clé, par exemple une clé privée propre, le chiffrement ayant pour sa part été réalisé au moment de la compilation de l'application d'origine, à l'aide d'une clé publique générée par le compilateur ou l'éditeur de lien, par exemple. La clé privée, quant à elle, est transmise par exemple postérieurement à l'établissement de la liaison de de transmission de données de données sécurisée avec le dispositif appelant. Ains, le dispositif d'exécution (B) (et l'application d'origine) n'est pas en possession de cette clé privée et ne peut donc pas mettre en œuvre de traitement de la structure d'exécution sécurisée avant d'avoir reçu cette clé privée de la part du dispositif appelant.

### 5.4. Mise à disposition des fonctions de l'application d'origine

Comme explicité précédemment, l'exécution d'une fonction par l'intermédiaire de la structure d'exécution sécurisée n'est possible que si cette fonction est autorisée à être exécutée. Deux modes de réalisation particuliers ont été présentés pour ce faire :
- un mécanisme d'annotation, dont l'objet est en quelque sorte de lier la fonction UCFN avec un nom de fonction codé CFN : avec ce mode de réalisation, si une fonction UCFN n'est pas annotée avec son nom de fonction codée CFN, elle ne peut pas fait l'objet d'un appel par l'intermédiaire de la structure d'exécution sécurisée. Cela permet de limiter drastiquement les possibilités d'appel par cette voie et donc augmente la sécurité de l'application ; et/ou
- un mécanisme d'enregistrement déclaratif, basé sur l'utilisation d'une table spécifique, associant nom de fonction codée et nom de fonction chiffré selon deux méthodes différentes, l'avantage étant qu'il est possible par cette voie de mettre à jour cette table spécifique, qui peut être reçue directement depuis le dispositif appelant, au moment de l'exécution, ce qu'il n'est pas possible de faire avec les annotations ;
- En sus des fonctions « annotées », on dispose d'un unique point d'entrée, fonction « méta », qui prend en entrée un nom de fonction codé CFN et des arguments (par exemple sous la forme de tableau) et utilise la réflexivité (l'introspection), tel que décrit précédemment pour appeler telle ou telle fonction ou méthode ;

L'ensemble des mécanismes précédemment décrits sont bien sur combinable pour obtenir une application d »'origine malléable à laquelle le dispositif appelant puisse faire exécuter de nombreuses fonctions, prévues ou non prévue à l'avance, et toute sécurité.

### 5.5. Assurance de l'exécution par le dispositif d'exécution

Parmi les exigences qui peuvent survenir lors de la mise en œuvre de la présente technique, l'assurance que le code exécuté est correct est assurément l'une des plus importante. Ainsi, afin d'assurer que le programme a été exécuté comme prévu, l'utilisation de la composition monadique est mise en œuvre. Ainsi, en plus des messages d'erreur potentiels interceptés lors de l'exécution et du résultat renvoyé, le suivi d'exécution peut être (signé et) renvoyé au dispositif appelant. Il est également possible de sérialiser le programme assemblé (fonction résultante) et de l'envoyer pour inspection au dispositif appelant : une telle mise en œuvre n'est pas nécessairement efficace, notamment du point de vue de l'utilisation des ressources réseau, cependant l'utilisation de la composition monadique pour l'obtention de la fonction résultante rend cette solution possible.

### 5.6. Liaison sécurisée entre le dispositif appelant et le dispositif d'exécution

L'établissement de la liaison de transmission de données de données sécurisée est mis en œuvre par le cœur applicatif de l'application d'origine, de manière indépendante, au démarrage de l'application d'origine sur le dispositif d'exécution. Plus particulièrement, au démarrage de l'application d'origine, la méthode suivante est mise en œuvre :
- le cœur applicatif charge les paramètres applicatifs au sein d'une zone mémoire (sécurisée), si ceux-ci ne sont pas déjà chargés (ou en cache) ;
- le cœur applicatif charge le module (de communication) comprenant l'ensembles de fonctions de communication ;
- le cœur applicatif, recherche, au sein de la zone mémoire (sécurisée), les paramètres et valeurs de connexion ;
- en lien avec le dispositif appelant et le module de communication, le cœur applicatif établi la liaison de transmission de données sécurisée, comprenant par exemple :
   - définir les paramètres de chiffrement déchiffrement de données au sein d'une session, par exemple http/http2 sécurisée par le protocole SSL et/ou TLS ;
   - définir une clé de session, dérivée de couples de clés privées/clés publiques en possession du cœur applicatif et du dispositif appelant.

La session peut être directement montée entre l'application d'origine et le dispositif appelant. Elle peut également être montée avec un dispositif intermédiaire, présent sur le réseau de communication, avec lequel l'application d'origine détermine des paramètres de connexion au dispositif appelant, pour ensuite lancer une session avec le dispositif appelant.

Quel que soit le mode utilisé, à l'issue de ce démarrage, l'application d'origine a établi, avec le dispositif appelant, une session de communication sécurisée, permettant au dispositif appelant de transmettre des structures d'exécution sécurisées, telles que décrites précédemment, à l'application d'origine.

De manière complémentaire, l'application d'origine peut établir une session de communication avec un dispositif électronique complémentaire, par exemple un dispositif électronique de vérification (dispositif de vérification (C)) qui est destinataire des résultats des exécutions des fonctions mise en œuvre par le dispositif d'exécution. L'établissement de cette session suit les mêmes étapes que celles précédemment décrites et le dispositif de vérification (C) prend la place du dispositif appelant (A) pour la vérification (et éventuellement l'authentification) des résultats d'exécution. Dans un tel cas de figure, le dispositif appelant (A) joue le rôle d'un dispositif de transmission de commandes tandis que le dispositif de vérification (C) effectue les opérations de vérification et/ou certification et/ou authentification des résultats obtenus.

### 5.7. Structuration de l'application d'origine

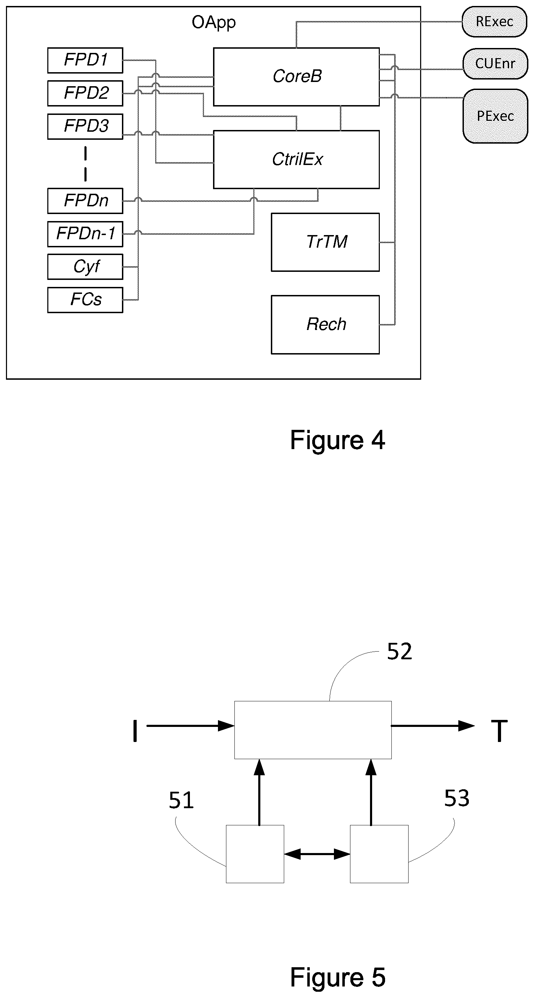

La figure 4 présente la structure de l'application d'origine telle que mise en œuvre dans le cadre de l'invention. L'application d'origine comprend :
- un cœur applicatif (CoreB), dont une fonction importante est de traiter les structures de données reçues de la part du dispositif appelant, comme explicité précédemment ;
- un ensemble de fonctions prédéfinies (FPD1,... FPD_{N}) ; chaque fonction prédéfinie de l'ensemble de fonctions prédéfinies comprend un nom de fonction réel ;
- un contrôleur d'exécution (CtrilEx), notamment prenant en charge le contrôle de flux d'exécution lorsque celle fonctionnalité est mise en œuvre, et gérant la mise en œuvre de l'étape 35 précédemment décrite ;
- un ensemble de fonctions de communication (FCs), permettant la transmission et la réception de données avec le dispositif appelant, cet ensemble de fonctions de communication étant mis en œuvre de manière indépendante par le cœur applicatif de l'application, dans le cadre des échanges avec le dispositif appelant et/ou dans le cadre d'échanges avec d'autres services « autorisés » ;
- un module de chiffrement (Cyf), permettant de chiffrer et de déchiffrer des données ;
- un module de traitement (TrTM) de structures de données d'exécution, lesdites structures de données d'exécution étant, comme explicité précédemment, reçues en provenance du dispositif appelant ; ce module peut être fusionné dans le cœur applicatif ;
- un module de recherche (Rech), au sein d'une structure de données, de noms de fonctions réels en fonction de noms de fonctions codifiées (noms de fonctions codifiés présents dans la/les structures de données d'exécution), selon le procédé décrit précédemment ; ce module peut être fusionné dans le cœur applicatif ;

On note que, selon l'invention, l'application d'origine est dépourvue d'API. L'application d'origine n'expose pas d'interface applicative à distance qui comprendrait un accès (directes) aux fonctions masquées. L'application n'est pas en mesure de recevoir un appel de fonction (qui peut être distante) en provenance d'un dispositif appelant, autrement que par le mécanisme décrit précédemment. Ainsi, l'application, par l'intermédiaire de ses fonctions de communication, est en mesure de recevoir une structure de données d'exécution, prenant la forme par exemple d'un flux JSON, XML, CSV ou autre, ce flux comprenant un ensemble de noms de fonctions cachées et des paramètres, lesquels sont éventuellement chiffrés à l'aide d'une clé de chiffrement issue de la création de la liaison de communication sécurisée.

On note également que la mise en œuvre de l'invention, pour tous ses modes de réalisation, peut être réalisée sur un dispositif électronique comprenant à la fois un dispositif électronique d'exécution et un dispositif électronique de contrôle tels que décrits précédemment. On note également que toutes les caractéristiques des modes de réalisation sont combinables afin de produire des effets escomptés, et notamment de permettre l'exécution de fonctions ou des enchainements de fonctions non nécessairement prévus à l'avance et ce sans avoir à modifier l'application d'origine.

### 5.8. Description d'un mode de réalisation spécifique

Dans un mode de réalisation adapté au traitement de transactions mettant en œuvre des données sensibles (données biométriques, signatures vocales, empreintes numériques, données de santé, données de paiement), un terminal de communication d'un utilisateur est pourvu d'une application dont au moins certaines fonctions peuvent avoir pour objet la manipulation de telles données. Par exemple, l'application en question peut être une application de paiement ou encore une application bancaire. Dans le cadre de ce mode de réalisation, le gestionnaire du service met à disposition sur un magasin applicatif, une application d'origine. Afin d'éviter que des données importantes ne soient extraites de l'application d'origine, et dans l'objectif de garantir la sécurité et l'intégrité des données qui sont traitées par celle-ci, l'application d'origine est conforme à la description précédemment réalisée.

En conditions opérationnelles, le dispositif appelant est par exemple un serveur bancaire ou un serveur transactionnel manipulant des données de paiement. Lors de l'exécution de l'application, le procédé précédemment décrit est mis en œuvre. Ce procédé permet, au serveur bancaire, de commander l'application d'origine installée sur le terminal de communication de l'utilisateur, les commandes en question sont insérées dans la structure d'exécution qui est transmise, par l'intermédiaire de la liaison de transmission sécurisée, à l'application d'origine du terminal de communication. La finalité de cette transmission peut être de vérifier le bon fonctionnement de l'application d'origine et/ou d'obtenir des informations sur le terminal de communication de l'utilisateur et/ou d'exécuter du code métier. A réception de cette structure d'exécution, l'application met en œuvre le procédé précédemment décrit pour transmettre le ou les résultats d'exécution des fonctions au serveur bancaire. Celui-ci est alors en mesure d'analyser les résultats obtenus. Les commandes transmises au terminal de communication et l'analyse des résultats obtenus peut avoir plusieurs finalités. Notamment, il peut s'agir de vérifier que le terminal de communication est dans un état acceptable pour pouvoir mettre en œuvre d'autres fonctions. A titre d'exemple, les commandes (et donc les fonctions exécutées) peuvent avoir pour objet de déterminer quelle est la version du système d'exploitation installée, quelle est la version de la machine virtuelle installée, quelles sont les heures et dates du terminal de communication, quelles sont les versions des bibliothèques de chiffrement et/ou des bibliothèques de communication ou encore quels sont les états des éléments de sécurisation (SE, TEE). Cette première série de commande et les résultats qui sont fournis permettent ainsi au serveur bancaire d'estimer un état de risque du terminal de communication, et permettent par exemple de décider de poursuivre ou non les opérations menées avec le terminal de communication. En fonction de l'apparition de nouvelles vulnérabilités, les commandes qui sont transmises au terminal de communication par le serveur bancaires peuvent variées dans le temps. Par exemple, si une vulnérabilité est découverte au niveau d'une bibliothèque de compression de données, le serveur bancaire peut alors intégrer dans les commandes qu'il transmet au terminal de communication, une commande de vérification de la version de la bibliothèque de compression.

Les commandes peuvent également, comme cela a été exposé précédemment matérialiser une fonction nouvelle, non existante précédemment, qui est le résultat de l'enchainement de l'ensemble des fonctions de la structure d'exécution. Les fonctions unitaires (UFCN) de la structure d'exécution peuvent alors comprendre un ensemble comprenant des fonctions métiers spécifiques de l'application et/ou des fonction de base du système d'exploitation et/ou de la machine virtuelle afin de former une fonction unique qui n'avait pas d'exitance préalable. Avec une telle mise en œuvre, on comprend qu'un attaquant, même s'il dispose d'information sensibles sur le terminal de communication, ne sera pas en mesure de prendre connaissance de l'enchainement logique mis en œuvre grâce à la structure d'exécution, et donc ne sera pas en mesure de comprendre le fonctionnement réel de l'application.

Par ailleurs, un autre avantage de cette manière de procéder réside dans le fait que le serveur bancaire peut, sciemment introduire, dans la structure d'exécution, des appels de fonction inutiles, dont le seul objectif est de perturber l'analyse du comportement de l'application. Ainsi, grâce à cette mise en œuvre, on dispose d'une application très sécurisée, susceptible de résister de manière plus efficace aux attaques.

De plus, dans un mode de mise en œuvre particulier, les commandes ont pour objectif de mettre à jour l'application d'origine. Les fonctions disponibles dans l'application d'origine peuvent alors comprendre des fonctions de compilation et d'édition de liens, qui lorsqu'elles sont commandées par le dispositif appelant, prennent, dans la structure de données de transmission un code source ou un code partiellement compilé, qui est compilé par l'application d'origine pour une mise à jour de sa propre structure applicative.

### 5.9. Autres caractéristiques et avantages

On présente, en relation avec la figure 5, une architecture simplifiée d'un dispositif électronique d'exécution apte à effectuer le traitement et l'exécution de code selon le procédé décrit précédemment. Un dispositif électronique d'exécution comprend une mémoire 51 (et/ou éventuellement sécurisée et/ou deux mémoires séparées, une sécurisée et l'autre non), une unité de traitement 52 équipée par exemple d'un microprocesseur (et/ou éventuellement sécurisé et/ou deux processeurs séparés, un sécurisé et l'autre non), et pilotée par le programme d'ordinateur 53, mettant en œuvre le procédé tel que précédemment décrit. Dans au moins un mode de réalisation, l'invention est mise en œuvre au moins partiellement sous la forme d'une application AppO installée sur ce dispositif. Un tel dispositif comprend :
- des moyens de réception en provenance du dispositif appelant, d'une structure de données d'exécution, comprenant au moins un d'enregistrement, chaque enregistrement comprenant au moins un champ de données comprenant un nom de fonction codé ;
- des moyens de Sauvegarde, au sein d'une zone mémoire spécifique, de ladite structure de données d'exécution ;
- des moyens, utilisés pour chaque enregistrement courant de la structure de données d'exécution, pour la mise en œuvre d'une fonction portant un nom de fonction décodé correspondant au nom de fonction codé, lorsque la fonction portant un nom de fonction décodé de l'application AppO peut être associée au nom de fonction codé.

Pour l'exécution des fonctions qui lui sont confiés, le dispositif comprend également les moyens de mise en œuvre de l'ensemble des étapes précédemment mentionnées, soit sous une forme matérielle, lorsque des composants spécifiques sont dédiés à ces tâches, soit sous une forme logicielle en lien avec un ou plusieurs microprogrammes s'exécutant sur un ou plusieurs processeurs du dispositif d'exécution.

## Revendications

1. Procédé de contrôle de l'exécution d'une application AppO, procédé mis en œuvre au sein de l'application AppO, ladite application AppO s'exécutant sur un dispositif électronique, nommé dispositif d'exécution (B), ledit dispositif d'exécution (B) étant connecté à un dispositif appelant (A) par l'intermédiaire d'un réseau de communication, ledit procédé comprenant les étapes suivantes :
- Réception (10) en provenance du dispositif appelant (A), d'une structure de données d'exécution (StrExec), comprenant au moins un d'enregistrement, chaque enregistrement comprenant au moins un champ de données comprenant un nom de fonction codé (CFN_x) ;
- Sauvegarde (20), au sein d'une zone mémoire spécifique (MZone), de ladite structure de données d'exécution (StrExec) ;
- Pour chaque enregistrement courant (CUEnr) de la structure de données d'exécution (StrExec) mise en œuvre (30) d'une fonction portant un nom de fonction décodé (UCFN_x) correspondant au nom de fonction codé (CFN_x), lorsque la fonction portant un nom de fonction décodé (UCFN_x) de l'application AppO peut être associée au nom de fonction codé (CFN_x),
**caractérisé en ce que** le procédé comprend également l'étape suivante:
transmission, audit dispositif appelant, d'un résultat d'exécution (RExec) de la fonction portant un nom de fonction décodé (UCFN_x) de sorte à contrôler un flot d'exécution par ledit dispositif appelant.

2. Procédé de contrôle de l'exécution d'une application selon la revendication 1, **caractérisé en ce que** l'étape de mise en œuvre (30) de la fonction portant un nom de fonction décodé (UCFN_x) correspondant au nom de fonction codé (CFN_x), comprend les étapes suivantes :
- Obtention (31) du nom de fonction décodé (UCFN_x) à partir du nom de fonction codé (CFN_x) dudit enregistrement courant (CUEnr) ;
- Lorsque l'obtention (31) du nom de fonction décodé (UCFN_x) à partir du nom de fonction codé (CFN_x) est positive (34), exécution (35) de la fonction portant le nom décodé (UCFN_x).

3. Procédé de contrôle de l'exécution d'une application selon la revendication 2, **caractérisé en ce que** l'étape d'exécution (35) de la fonction portant un nom de fonction décodé (UCFN_x), appelée fonction courante (FCour) comprend les étapes suivantes :
- Optionnellement, obtention (35-10) au sein de l'enregistrement courant (CUEnr), d'un ou plusieurs paramètres d'exécution (PExec) de la fonction courante FCour ;
- Tentative d'exécution (35-11) de la fonction courante FCour avec le ou les paramètres d'exécution (PExec) optionnels précédemment obtenus, avec un mécanisme d'exception sur exécution ;
- Lorsqu'aucune exception sur exécution n'est déclenchée, obtention (35-12) du résultat d'exécution (RExec) de la fonction courante (FCour) ;
- Inscription (35-13) du résultat (RExec) de la fonction courante (FCour) dans une zone mémoire spécifique de l'enregistrement courant et/ou de l'enregistrement suivant de la structure de données d'exécution.

4. Procédé de contrôle de l'exécution d'une application selon la revendication 3, **caractérisé en ce qu'**il comprend en outre une étape d'obtention (35-101) au sein de l'enregistrement courant (CUEnr), d'au moins une précondition d'exécution de ladite fonction courante et **en ce que** l'étape de tentative d'exécution (35-11) de la fonction courante FCour n'est déclenché qu'en cas de respect de ladite au moins une précondition.

5. Procédé de contrôle de l'exécution d'une application selon la revendication 1, **caractérisé en ce que** l'étape de mise en œuvre (30) de la fonction portant le nom de fonction décodé (UCFN_x) correspondant au nom de fonction codé (CFN_x) comprend une étape d'introspection de ladite application, délivrant un résultat d'introspection positif lorsqu'une fonction portant le nom de fonction décodé (UCFN_x) est identifiée parmi l'ensemble de fonctions de ladite application.

6. Procédé de contrôle de l'exécution d'une application selon la revendication 2, **caractérisé en ce que** l'étape d'obtention (31) du nom de fonction décodé (UCFN_x) à partir du nom de fonction codé (CFN_x) dudit enregistrement courant (CUEnr) comprend une étape de recherche (33) de la présence d'une fonction existante à partir d'une annotation comprenant le nom de fonction codé (CFN_x), ladite annotation étant associée à la fonction portant le nom de fonction décodé (UCFN_x).

7. Procédé selon la revendication 1, **caractérisé en ce que** ladite étape de réception (10) de la structure de données d'exécution est précédée de l'établissement d'une liaison de communication sécurisée (LSec).

8. Procédé selon la revendication 1, **caractérisé en ce que** ladite structure de données d'exécution est chiffrée et **en ce que** le procédé comprend une étape de déchiffrement de la structure de données d'exécution.

9. Dispositif configuré pour effectuer un contrôle d'exécution d'une application AppO, ledit contrôle étant mis en œuvre au sein de l'application AppO, ladite application AppO s'exécutant sur un processeur dudit dispositif électronique, nommé dispositif d'exécution (B), ledit dispositif d'exécution (B) étant connecté à un dispositif appelant (A) par l'intermédiaire d'un réseau de communication, ledit dispositif d'exécution (B) comprenant les moyens suivants :
- Réception (10) en provenance du dispositif appelant (A), d'une structure de données d'exécution (StrExec), comprenant au moins un d'enregistrement, chaque enregistrement comprenant au moins un champ de données comprenant un nom de fonction codé (CFN_x) ;
- Sauvegarde (20), au sein d'une zone mémoire spécifique (MZone), de ladite structure de données d'exécution (StrExec) ;
- Pour chaque enregistrement courant (CUEnr) de la structure de données d'exécution (StrExec) mise en œuvre (30) d'une fonction portant un nom de fonction décodé (UCFN_x) correspondant au nom de fonction codé (CFN_x), lorsque la fonction portant un nom de fonction décodé (UCFN_x) de l'application AppO peut être associée au nom de fonction codé (CFN_x),
**caractérisé en ce que** le dispositif comprend également le moyen suivant:
transmission, audit dispositif appelant, d'un résultat d'exécution (RExec) de la fonction portant un nom de fonction décodé (UCFN_x) de sorte à contrôler un flot d'exécution par ledit dispositif appelant.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé selon la revendication 1, lorsqu'il est exécuté sur un ordinateur.

## Patentansprüche

1. Verfahren zum Steuern der Ausführung einer Anwendung (App0), wobei das Verfahren in der Anwendung (App0) implementiert ist, wobei die Anwendung (App0) auf einem elektronischen Gerät, dem sogenannten Ausführungsgerät (B), ausgeführt wird, wobei das Ausführungsgerät (B) über ein Kommunikationsnetzwerk mit einem aufrufenden Gerät (A) verbunden ist, wobei das Verfahren die folgenden Schritte umfasst:
- Empfangen (10) einer Ausführungsdatenstruktur (StrExec) von der aufrufenden Vorrichtung (A), wobei die Ausführungsdatenstruktur mindestens einen Datensatz umfasst, wobei jeder Datensatz mindestens ein Datenfeld umfasst, das einen codierten Funktionsnamen (CFN_x) umfasst;
- Speichern (20) der Ausführungsdatenstruktur (StrExec) in einem bestimmten Speicherbereich (MZone);
- Für jeden aktuellen Datensatz (CUEnr) der Ausführungsdatenstruktur (StrExec) Implementieren (30) einer Funktion mit einem decodierten Funktionsnamen (UCFN_x), der dem codierten Funktionsnamen (CFN_x) entspricht, wenn die Funktion mit dem decodierten Funktionsnamen (UCFN_x) der Anwendung (App0) dem codierten Funktionsnamen (CFN_x) zugeordnet werden kann;
**dadurch gekennzeichnet, dass** das Verfahren außerdem den folgenden Schritt umfasst:
- Übertragen eines Ausführungsergebnisses (RExec) der Funktion mit einem decodierten Funktionsnamen (UCFN_x) an die aufrufende Vorrichtung, um einen Ausführungsfluss durch die aufrufende Vorrichtung zu steuern.

2. Verfahren zur Steuerung der Ausführung einer Anwendung gemäß Anspruch 1, **dadurch gekennzeichnet, dass** der Schritt der Implementierung (30) der Funktion mit einem decodierten Funktionsnamen (UCFN_x), der dem codierten Funktionsnamen (CFN_x) entspricht, die folgenden Schritte umfasst:
- Erhalten (31) des decodierten Funktionsnamens (UCFN_x) aus dem codierten Funktionsnamen (CFN_x) des aktuellen Datensatzes (CUEnr);
- Wenn das Erhalten (31) des decodierten Funktionsnamens (UCFN_x) aus dem codierten Funktionsnamen (CFN_x) positiv ist (34), Ausführen (35) der Funktion mit dem decodierten Namen (UCFN_x).

3. Verfahren zur Steuerung der Ausführung einer Anwendung gemäß Anspruch 2, **dadurch gekennzeichnet, dass** der Schritt des Ausführens (35) der Funktion mit einem decodierten Funktionsnamen (UCFN_x), die als aktuelle Funktion (FCour) bezeichnet wird, die folgenden Schritte umfasst:
- Optional, Erhalten (35-10) eines oder mehrerer Ausführungsparameter (PExec) der aktuellen Funktion (FCour) im aktuellen Datensatz (CUEnr);
- Versuchen, die aktuelle Funktion (Fcour) mit den zuvor erhaltenen optionalen Ausführungsparametern (PExec) auszuführen (35-11), mit einem Ausnahmemechanismus bei der Ausführung;
- Wenn bei der Ausführung keine Ausnahme ausgelöst wird, Ermitteln (35-12) des Ausführungsergebnisses (RExec) der aktuellen Funktion (FCour);
- Schreiben (35-13) des Ergebnisses (RExec) der aktuellen Funktion (FCour) in einen bestimmten Speicherbereich des aktuellen Datensatzes und/oder des folgenden Datensatzes der Ausführungsdatenstruktur.

4. Verfahren zur Steuerung der Ausführung einer Anwendung gemäß Anspruch 3, **dadurch gekennzeichnet, dass** es ferner einen Schritt zum Erhalten (35-101) mindestens einer Vorbedingung für die Ausführung der aktuellen Funktion im aktuellen Datensatz (CUEnr) umfasst und dass der Schritt zum Versuchen der Ausführung (35-11) der aktuellen Funktion (FCour) nur ausgelöst wird, wenn die mindestens eine Vorbedingung erfüllt ist.

5. Verfahren zur Steuerung der Ausführung einer Anwendung gemäß Anspruch 1, **dadurch gekennzeichnet, dass** der Schritt des Implementierens (30) der Funktion mit dem decodierten Funktionsnamen (UCFN_x), der dem codierten Funktionsnamen (CFN_x) entspricht, einen Schritt des Introspektions der Anwendung umfasst, wobei ein positives Introspektionsergebnis geliefert wird, wenn eine Funktion mit dem decodierten Funktionsnamen (UCFN_x) unter der Menge von Funktionen der Anwendung identifiziert wird.

6. Verfahren zur Steuerung der Ausführung einer Anwendung gemäß Anspruch 2, **dadurch gekennzeichnet, dass** der Schritt des Erhaltens (31) des decodierten Funktionsnamens (UCFN_x) aus dem codierten Funktionsnamen (CFN_x) des aktuellen Datensatzes (CUEnr) umfasst einen Schritt des Suchens (33) nach dem Vorhandensein einer bestehenden Funktion auf der Grundlage einer Anmerkung, die den codierten Funktionsnamen (CFN_x) umfasst, wobei die Anmerkung der Funktion mit dem decodierten Funktionsnamen (UCFN_x) zugeordnet ist.

7. Verfahren nach Anspruch 1, **dadurch gekennzeichnet, dass** dem Schritt des Empfangens (10) der Ausführungsdatenstruktur die Einrichtung einer sicheren Kommunikationsverbindung (LSec) vorausgeht.

8. Verfahren nach Anspruch 1, **dadurch gekennzeichnet, dass** die Ausführungsdatenstruktur verschlüsselt ist und dass das Verfahren einen Schritt zum Entschlüsseln der Ausführungsdatenstruktur umfasst.

9. Vorrichtung, die so konfiguriert ist, dass sie eine Ausführung einer Anwendung (App0) steuert, wobei die Steuerung in der Anwendung (App0) implementiert ist, wobei die Anwendung (App0) auf einem Prozessor der elektronischen Vorrichtung, der als Ausführungsvorrichtung (B) bezeichnet wird, ausgeführt wird, wobei die Ausführungsvorrichtung (B) über ein Kommunikationsnetzwerk mit einer aufrufenden Vorrichtung (A) verbunden ist, wobei die Ausführungsvorrichtung (B) die folgenden Mittel umfasst:
- Empfangen (10) einer Ausführungsdatenstruktur (StrExec) von der aufrufenden Vorrichtung (A), wobei die Ausführungsdatenstruktur mindestens einen Datensatz umfasst, wobei jeder Datensatz mindestens ein Datenfeld umfasst, das einen codierten Funktionsnamen (CFN_x) umfasst;
- Speichern (20) der Ausführungsdatenstruktur (StrExec) in einem bestimmten Speicherbereich (MZone);
- Für jeden aktuellen Datensatz (CUEnr) der Ausführungsdatenstruktur (StrExec) Implementierung (30) einer Funktion mit einem decodierten Funktionsnamen (UCFN_x), der dem codierten Funktionsnamen (CFN_x) entspricht, wenn die Funktion mit einem decodierten Funktionsnamen (UCFN_x) der Anwendung (App0) dem codierten Funktionsnamen (CFN_x) zugeordnet werden kann;
**dadurch gekennzeichnet, dass** das Verfahren außerdem die folgenden Mittel umfasst:
- Übertragung eines Ausführungsergebnisses (RExec) der Funktion mit einem decodierten Funktionsnamen (UCFN_x) an die aufrufende Vorrichtung, um einen Ausführungsablauf durch die aufrufende Vorrichtung zu steuern.

10. Computerprogrammprodukt, das aus einem Kommunikationsnetzwerk heruntergeladen und/oder auf einem computerlesbaren und/oder von einem Mikroprozessor ausführbaren Träger gespeichert werden kann, **dadurch gekennzeichnet, dass** es Programmcodeanweisungen zur Ausführung eines Verfahrens gemäß Anspruch 1 umfasst, wenn es auf einem Computer ausgeführt wird.

## Claims

1. Method for controlling the execution of an application (AppO), a method implemented in the application (App0), said application (App0) being executed on an electronic device, called execution device (B), said execution device (B) being connected to a caller device (A) via a communication network, said method comprising the following steps:
- Receiving (10) from the caller device (A) an execution data structure (StrExec), comprising at least one record, each record comprising at least one data field comprising an encoded function name (CFN_x);
- Saving (20), in a specific memory zone (MZone), said execution data structure (StrExec);
- For each current record (CUEnr) of the execution data structure (StrExec) implementing (30) a function having a decoded function name (UCFN_x) corresponding to the encoded function name (CFN_x), when the function having a decoded function name (UCFN_x) of the application (App0) can be associated with the encoded function name (CFN_x);
**characterized in that** the method also comprises the following step:
- transmission, to said caller device, of a result of execution (RExec) of the function having a decoded function name (UCFN_x) so as to control an execution flow by said caller device.

2. Method for controlling the execution of an application according to claim 1, **characterised in that** the step of implementation (30) of the function having a decoded function name (UCFN_x) corresponding to the encoded function name (CFN_x) comprises the following steps:
- Obtaining (31) the decoded function name (UCFN_x) from the encoded function name (CFN_x) of said current record (CUEnr);
- When the obtaining (31) of the decoded function name (UCFN_x) from the encoded function name (CFN_x) is positive (34), executing (35) the function having the decoded name (UCFN_x).

3. Method for controlling the execution of an application according to claim 2, **characterised in that** the step of executing (35) the function having a decoded function name (UCFN_x), called current function (FCour), comprises the following steps:
- Optionally, obtaining (35-10) in the current record (CUEnr) one or more execution parameters (PExec) of the current function (FCour);
- Attempting to execute (35-11) the current function (Fcour) with the optional execution parameter(s) (PExec) previously obtained, with an exception mechanism upon execution;
- When no exception upon execution is triggered, obtaining (35-12) the result of execution (RExec) of the current function (FCour);
- Writing (35-13) the result (RExec) of the current function (FCour) in a specific memory zone of the current record and/or of the following record of the execution data structure.

4. Method for controlling the execution of an application according to claim 3, **characterised in that** it further comprises a step of obtaining (35-101) in the current record (CUEnr) at least one precondition for execution of said current function and **in that** the step of attempting to execute (35-11) the current function (FCour) is only triggered if said at least one precondition is satisfied.

5. Method for controlling the execution of an application according to claim 1, **characterised in that** the step of implementing (30) the function having the decoded function name (UCFN_x) corresponding to the encoded function name (CFN_x) comprises a step of introspection of said application, delivering a positive introspection result when a function having the decoded function name (UCFN_x) is identified among the set of functions of said application.

6. Method for controlling the execution of an application according to claim 2, **characterised in that** the step of obtaining (31) the decoded function name (UCFN_x) from the encoded function name (CFN_x) of said current record (CUEnr) comprises a step of searching (33) for the presence of an existing function on the basis of an annotation comprising the encoded function name (CFN_x), said annotation being associated with the function having the decoded function name (UCFN_x).

7. Method according to claim 1, **characterised in that** said step of receiving (10) the execution data structure is preceded by the establishment of a secure communication link (LSec).

8. Method according to claim 1, **characterised in that** said execution data structure is encrypted and **in that** the method comprises a step of decrypting the execution data structure.

9. Device configured to carry out a control of execution of an application (AppO), said control being implemented in the application (AppO), said application (AppO) being executed on a processor of said electronic device, called execution device (B), said execution device (B) being connected to a caller device (A) via a communication network, said execution device (B) comprising the following means:
- Receiving (10) from the caller device (A) an execution data structure (StrExec), comprising at least one record, each record comprising at least one data field comprising an encoded function name (CFN_x);
- Saving (20), in a specific memory zone (MZone), said execution data structure (StrExec);
- For each current record (CUEnr) of the execution data structure (StrExec) implementation (30) of a function having a decoded function name (UCFN_x) corresponding to the encoded function name (CFN_x), when the function having a decoded function name (UCFN_x) of the application (App0) can be associated with the encoded function name (CFN_x);
**characterized in that** the method also comprises the following means:
- transmission to said caller device of a result of execution (RExec) of the function having a decoded function name (UCFN_x) so as to control an execution flow by said caller device.

10. Computer program product downloadable from a communication network and/or stored on a support readable by computer and/or executable by a microprocessor, **characterised in that** it comprises program code instructions for the execution of a method according to claim 1, when it is executed on a computer.
